# EUROPEAN PATENT SPECIFICATION

(11) **EP 1 028 558 B1**
(45) Date of publication and mention of the grant of the patent: **28.08.2002**
(21) Application number: 99850018.5
(22) Date of filing: 09.02.1999
(51) Int. Cl.: H04L 5/02

(54) **A method and apparatus for reducing cyclo-stationary cross-talk noise**
VERFAHREN UND VORRICHTUNG ZUR REDUZIERUNG DES CYCLOSTATIONÄREN ÜBERSPRECHENS
PROCEDE ET APPAREIL POUR LA REDUCTION DE BRUIT DIAPHONIQUE CYCLO-STATIONNAIRE

(43) Date of publication of application: 16.08.2000
(73) Proprietor: STMicroelectronics N.V., 1077 XX Amsterdam (NL); STMicroelectronics S.A., 92120 Montrouge (FR)
(72) Inventor: Isaksson, Mikael, 973 42 Lulea (SE); Johansson, Magnus, 972 41 Lulea (SE); Mestdagh, Denis Julien Gilles, 38410 Saint-Martin d'Uriage (FR); Mazzoni, Simone, 38000 Genoble (FR)
(74) Representative: de Beaumont, Michel

(56) References cited:
- WO-A-97/06619
- US-A- 5 680 394

## Description

### Field of the invention

The present invention relates to a method and arrangement for reducing cyclo-stationary cross-talk noise and more particularly to mitigate the effects of cyclo-stationary cross-talk noise from narrow band time division duplex systems into a wide band transmission system within a copper wire-pair transmission network. The wide band transmission system utilises frequency division duplex and the frequency band is divided into pairs of frequency bands having opposite transmission directions. The transmission directions of the frequency bands are switched in synchronism with the cyclo-stationary cross-talk noise from the time division duplex systems.

### State of the art

In certain copper access networks there exist narrow band TDD systems (a.k.a ping-pong systems) at low frequencies that introduces a rather complex cross-talk noise in neighbouring copper pairs in the same cable. One highly relevant example is an ISDN variant called TCM-ISDN (TCM - Time Compressed Mode) that is used primarily in Japan. Such a TDD system operates in such a way that the signalling up-stream (from the premises to the central office) and downstream (from the central office to the premises) is divided in different time slots, i.e. all the systems in the same cable is time synchronised.

The cross-talk noise from the TDD system introduced in neighbouring copper pairs will be time variant according to the direction of transmission of the TDD system, i.e. the TDD causes cyclo-stationary cross-talk noise in neighbouring pairs. In certain time periods there will be NEXT (Near End Cross-Talk) and in the other time periods there will be FEXT (Far End Cross-Talk). From a channel capacity point of view, the NEXT is far more damaging than the FEXT since the power spectral density of NEXT is stronger than the power spectral density of FEXT.

Systems that use higher band width might however be installed in the same cable and overlap the spectrum of the TDD cross-talk noise, e.g. VDSL (Very high bit-rate Digital Subscriber Lines) systems or ADSL (Asymmetric Digital Subscriber Lines). In this case, the lower part of the spectrum will be affected by this cyclo-stationary cross-talk noise. A VDSL system uses frequencies up to about 10 MHz, while the TCM-ISDN perhaps affects the frequencies up to about 2 MHz.

The optimum performance will be achieved when the new installed system is synchronised with the TDD system in such a way that only FEXT is introduced between the two systems. This is the same as arranging the signalling on the new systems in such a way that the direction of transmission is the same as in the TDD system.

One possibility to optimise VDSL according to the TCM-ISDN is to design VDSL as a TDD system with the same time synchronisation as TCM-ISDN, i.e. only transmit VDSL downstream when TCM-ISDN transmits down stream and vice versa. One problem doing so is that the period time for TCM-ISDN is 400 Hz which causes a system delay, or system latency, that is too high than specified for VDSL and can in most cases not be accepted.

The present invention solves the above problem by dividing the frequency range of the wide band transmission system into at least two bands transmitting in opposite directions. The lower band, which is affected by the cross-talk from the TDD system, is synchronised with the TDD system such that they always transmit in the same direction. With this arrangement the near end cross-talk from the TDD system into the wide band transmission system is avoided and the far end cross-talk from the TDD system will be the limiting noise source. The simultaneous switching of transmission directions in the two frequency bands does not add extra latency to the wide band transmission signal.

### Summary of the invention

Thus, the present invention provides a method for reducing cyclo-stationary cross-talk noise from a narrow band time divided duplex system into a wide band transmission system in a copper wire-pair network, wherein the TDD system operates in a lower part of the spectrum.

In accordance with the invention, the wide band transmission system operates with frequency divided duplex. The wide band is divided in at least two bands, such that the lower band is at least partly overlapping the time divided duplex system. The lower and the higher band are transmitting in opposite directions. The transmission direction of the frequency bands is switched so that the lower band of the wide band transmission system always transmits in the same direction as the time divided duplex system.

The invention also relates to an arrangement for performing a method. The invention is defined in the independent claims 1 and 7, while preferred embodiments are set forth in the dependent claims.

### Brief description of the drawings

The invention will be described below in detail with reference to the attached drawing, of which the only figure is a signal frequency diagram relating to an arrangement in accordance with the invention.

### Detailed description of preferred embodiments

For ease of reference we herewith give a list of the abbreviations used throughout the specification:

| | |
|---|---|
| TDD | Time Division Duplex |
| FDD | Frequency Division Duplex |
| TCM | Time Compressed Mode |
| NEXT | Near End Cross-Talk |
| FEXT | Far End Cross-Talk |
| VDSL | Very high bit-rate Digital Subscriber Line |
| ADSL | Asymmetric Digital Subscriber Line |

The present invention describes how the effects of cyclo-stationary cross-talk noise from a narrow band TDD system can be mitigated by letting the wide band transmission system use an FDD system where the direction of transmission in two frequency bands can switch transmission direction simultaneously synchronised to the noise. The invention assumes that the cyclo-stationary cross-talk noise is concentrated to lower frequencies, and further that the FDD system uses a larger signal bandwidth that overlaps the narrower TDD signal bandwidth that is located at lower frequencies.

This invention describes a way to avoid NEXT from a narrow band TDD system into an FDD system by simultaneously switching transmission direction in two frequency bands synchronously to the TDD systems.

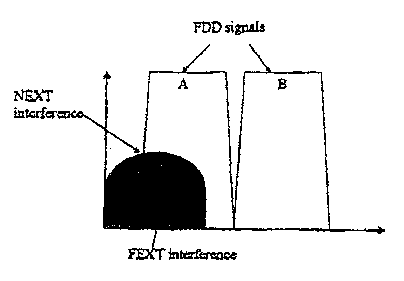

With reference to Figure 1, let us assume that we divide the FDD spectrum in two frequency bands, A and B, where A is the lower frequency band and B the higher frequency band. Figure 1 shows a wide-band FDD system with two signalling bands A and B and cross-talk noise, NEXT and FEXT, from a narrow band TDD system. The TDD system has less signal bandwidth than the FDD system and operates in the lower part of the spectrum. The FDD system spectrally overlaps the TDD cross-talk noise. Since the TDD systems cause cross-talk, NEXT and FEXT, in the lower part of the frequency spectrum, band A in the FDD system suffers more from this than frequency band B that is located in the upper part of the spectrum.

The FDD direction of transmission should optimally be arranged in such a way that the FDD system transmits downstream in band A and upstream in band B when the TDD system transmits downstream. In the same way the FDD system should transmit upstream in A and downstream in B when the TDD systems transmits upstream. The FDD wide band transmission system is associated with a switching means adapted to switch the transmission direction in the frequency bands. The switch of transmission direction for both bands can be triggered by a synchronisation provided by the TDD system equipment. The FDD system can switch transmission direction in the two frequency bands synchronously to the cyclo-stationary cross-talk noise from a TDD system operating in the same cable (network). The switching of transmission direction in the frequency bands should be arranged so that the lower band of the FDD system always transmits in the same direction as the TDD system and the higher frequency band hence transmit in the opposite direction to the TDD system.

The invention is not limited to an FDD system with only two bands. There might exist more frequency bands at upper part of the spectrum that actually do not need to be switched. The invention requires, however, that the switching of direction is done in pairs and that the transmission direction of one band is always the opposite of the other. Each frequency band of the FDD system can be used for either upstream or for downstream transmission.

One benefit with this invention is that it does not cause long latency in the FDD system if the TDD system switches direction with a low periodicity. The simultaneous switching of transmission directions in the two frequency bands does not add extra latency to the wide band transmission signal. With this arrangement the near end cross-talk from the TDD system into the wide band transmission system is avoided and the far end cross-talk from the TDD system will be the limiting noise source.

## Claims

1. A method for reducing cyclo-stationary cross-talk noise from a narrow band time division duplex (TDD) system into a wide band transmission system in a copper wire-pair network, wherein the TDD system operates in a lower part of the spectrum, and the wide band transmission system operates with frequency division duplex (FDD), the wide band being divided in at least two bands (A, B), such that the lower band (A) is at least partly overlapping the TDD system and the lower (A) and the higher band (B) are transmitting in opposite directions, **characterised in that** the transmission direction in the frequency bands is switched so that the lower band of the wide band transmission system always transmits in the same direction as the TDD system.

2. A method in accordance with claim 1, **characterised in that** the frequency bands of the wide band transmission system are switched by means of a synchronisation signal derived from the TDD system.

3. A method in accordance with claim 2, **characterised in that** the synchronisation signal is substantially synchronous with the cyclo-stationary cross-talk noise from the TDD system.

4. A method in accordance with claim 1, 2 or 3, **characterised in that** the wide band is divided-into an even number of bands, arranged in pairs, such that the lower and the higher band in each pair are transmitting in opposite directions.

5. A method in accordance with any one of the previous claims, **characterised in that** the wide band transmission system is a very high bit-rate digital subscriber line (VDSL) system or an asymmetric digital subscriber line (ADSL) system.

6. A method in accordance with any one of the previous claims, **characterised in that** the narrow band transmission system is a time compressed mode integrated services digital network (TCM-ISDN) system.

7. An arrangement for reducing cyclo-stationary cross-talk noise comprising a copper wire-pair network, a narrow band time division duplex (TDD) system and a wide band transmission system, both systems operating in said copper wire-pair network, the TDD system operating in a lower part of the spectrum, and the wide band transmission system being adapted to operate with frequency division duplex (FDD), the wide band being divided in at least two bands (A, B), such that the lower band (A) is at least partly overlapping the TDD system, and the lower (A) and the higher band (B) are transmitting in opposite directions, **characterised by** comprising a means for switching the transmission direction in the frequency bands of the wide band transmission system, so that the lower band always transmits in the same direction as the TDD system.

8. An arrangement in accordance with claim 7, **characterised in that** the switching means is triggered by a synchronisation signal derived from the TDD system to switch the frequency bands of the wide band transmission system.

9. An arrangement in accordance with claim 8, **characterised in that** the synchronisation signal is substantially synchronous with the cyclo-stationary cross-talk noise from the TDD system.

10. An arrangement in accordance with claim 7, 8 or 9, **characterised in that** the wide band is divided into an even number of bands, arranged in pairs, such that the lower and the higher band in each pair are transmitting in opposite directions.

11. An arrangement in accordance with any one of claims 7 to 10, **characterised in that** the wide band transmission system is a very high bit-rate digital subscriber line (VDSL) system or an asymmetric digital subscriber line (ADSL) system.

12. An arrangement in accordance with any one of claims 7 to 11, **characterised in that** the narrow band transmission system is a time compressed mode integrated services digital network (TCM - ISDN) system.

## Patentansprüche

1. Verfahren zur Verringerung von zyklostationärem. Übersprech-Rauschen von einem schmalbandigen Duplexsystem mit Zeitaufteilung (Zeit-Duplex-System, TDD-Time Division System) in ein breitbandiges Übertragungssystem in einem Kupfer-Leiterpaar-Netz, wobei das TDD-System in einem unteren Teil des Spektrums arbeitet und das Breitbandübertragungssystem mit Frequenz-Aufteilung-Duplex (Frequenz-Duplex, FDD-Frequency Division Duplex) arbeitet, und wobei das Breitband in wenigstens zwei Bänder (A, B) so unterteilt ist, daß das untere Band (A) sich wenigstens teilweise mit dem TDD-System überlappt und das untere Band (A) und das höhere Band (B) in entgegengesetzten Richtungen übertragen,
**dadurch gekennzeichnet, daß** die Übertragungsrichtung in den Frequenzbändern so umgeschaltet wird, daß das untere Band des Breitband-Übertragungssystems stets in derselben Richtung wie das TDD-System überträgt.

2. Verfahren nach Anspruch 1,
**dadurch gekennzeichnet, daß** die Frequenzbänder des Breitbandübertragungssystems mittels eines von dem TDD-System abgeleiteten Synchronisiersignals umgeschaltet werden.

3. Verfahren nach Anspruch 2,
**dadurch gekennzeichnet, daß** das Synchronisiersignal im wesentlichen synchron mit dem zyklostationären Übersprech-Rauschen aus dem TDD-System ist.

4. Verfahren nach Anspruch 1, 2 oder 5,
**dadurch gekennzeichnet, daß** das Breitband in eine geradzahlige Zahl von in Paaren angeordneten Bändern unterteilt ist, derart daß das untere und das höhere Band in jedem Paar jeweils in entgegengesetzter Richtung übertragen.

5. Verfahren nach einem der vorhergehenden Ansprüche,
**dadurch gekennzeichnet, daß** das Breitband-Übertragungssystem ein digitales Teilnehmeranschlußleitungssystem mit sehr hoher Bit-Rate (VDSL, very high bit-rate digital subscriber line system) oder ein asymmetrisches digitales Teilnehmer-Anschlußleitungssystem (ADSL) ist.

6. Verfahren nach einem der vorhergehenden Ansprüche,
**dadurch gekennzeichnet, daß** das Schmalband-Übertragungssystem ein im Zeitkompressions-Mode arbeitendes ISDN-Integriertes digitales Service-Network (TCM-ISDN) ist.

7. Anordnung zur Verringerung von zyklostationärem Übersprechen, welche umfaßt:
ein Kupfer-Leitungspaar-Netz, ein schmalbandiges Zeitaufteilungs-Duplexsystem (TDD) sowie ein Breitband-Übertragungssystem, die beide in dem Kupfer-Leitungspaar-System arbeiten, wobei das TDD-System in einem unteren Teil des Spektrums arbeitet und das Breitband-Übertragungssystem so ausgebildet ist, daß es im Frequenz-Aufteilungs-Duplexsystem arbeitet, wobei das Breitband in wenigstens zwei Bänder (A, B) so unterteilt ist, daß das untere Band (A) wenigstens teilweise das TDD-System überlappt und das untere Band (A) und das obere Band (B) in entgegengesetzter Richtung übertragen,
**dadurch gekennzeichnet, daß** die Anordnung eine Vorrichtung zur Umschaltung der Übertragungsrichtung in den Frequenzbändern des Breitband-Übertragungssystems umfaßt, derart daß das untere Band stets in derselben Richtung wie das TDD-System überträgt.

8. Anordnung nach Anspruch 7,
**dadurch gekennzeichnet, daß** die Umschaltvorrichtung durch ein von dem TDD-System abgeleitetes Synchronisationssignal zur Umschaltung der Frequenzbänder des Breitband-Übertragungssystems ausgelöst wird.

9. Anordnung nach Anspruch 8,
**dadurch gekennzeichnet, daß** das Synchronisationssignal im wesentlichen synchron mit dem zyklostationären Übersprech-Rauschen aus dem TDD-System ist.

10. Anordnung nach Anspruch 7, 8 oder 9,
**dadurch gekennzeichnet, daß** das Breitband in eine geradzahlige Anzahl von in Paaren angeordneten Bändern unterteilt ist, derart daß das untere und das höhere Band in jedem Paar jeweils in entgegengesetzter Richtung übertragen.

11. Anordnung nach einem der Ansprüche 7 bis 10,
**dadurch gekennzeichnet, daß** das Breitband-Übertragungssystem ein digitales Teilnehmeranschlußleitungssystem mit sehr hoher Bit-Rate (VDSL) oder ein asymmetrisches digitales Teilnehmeranschlußleitungs system (ADSL) ist.

12. Anordnung nach einem der Ansprüche 7 bis 11,
**dadurch gekennzeichnet, daß** das Schmalband-Übertragungssysten ein im zeitkomprimierten Mode arbeitendes digitales Integrated Services Netz-Systea (TCM-ISDN) ist.

## Revendications

1. Procédé pour réduire le bruit de diaphonie cyclo-stationnaire d'un système duplex à division dans le temps à bande étroite (TDD) vers un système d'émission à large bande dans un circuit à réseau de paires de fils de cuivre, dans lequel le système TDD fonctionne dans une partie inférieure du spectre et le système d'émission à large bande fonctionne en duplex à division de fréquence (FDD), la large bande étant divisée en au moins deux bandes (A, B) de sorte que la bande inférieure (A) recouvre au moins partiellement le système TDD et les bandes inférieure (A) et supérieure (B) émettent dans des directions opposées, **caractérisé en ce que** la direction de transmission dans les bandes de fréquence est commutée de sorte que la bande inférieure du système à transmission à large bande transmet toujours dans la même direction que le système TDD.

2. Procédé selon la revendication 1, **caractérisé en ce que** les bandes de fréquence du système de transmission à large bande sont commutées par un signal de synchronisation obtenu à partir du système TDD.

3. Procédé selon la revendication 2, **caractérisé en ce que** le signal de synchronisation est sensiblement synchrone du bruit de diaphonie cyclo-stationnaire en provenance du système TDD.

4. Procédé selon la revendication 1, 2 ou 3, **caractérisé en ce que** la large bande est divisée en un nombre entier de bandes disposées par paires de sorte que les bandes inférieure et supérieure de chaque paire sont transmises dans des directions opposées.

5. Procédé selon l'une quelconque des revendications précédentes, **caractérisé en ce que** le système de transmission à large bande est un système de ligne numérique d'abonné à très haut débit (VDSL) ou un système de ligne numérique d'abonné asymétrique (ADSL).

6. Procédé selon l'une quelconque des revendications précédentes, **caractérisé en ce que** le système de transmission à bande étroite est un système de circuit numérique à intégration de services à mode comprimé dans le temps (TCM-ISDN).

7. Système pour réduire le bruit de diaphonie cyclo-stationnaire comprenant un réseau à paires de fils de cuivre, un système duplex à division dans le temps à bande étroite (TDD) et un système de transmission à large bande, les deux systèmes fonctionnant dans le réseau à paires de fils de cuivre, le système TDD fonctionnant dans une partie inférieure du spectre, et le système de transmission à large bande étant adapté à fonctionner en duplex à division de fréquence (FDD), la large bande étant divisée en au moins deux bandes (A, B) de sorte que la bande inférieure (A) recouvre au moins partiellement le système TDD et que les bandes inférieure (A) et supérieure (B) transmettent dans des directions opposées, **caractérisé en ce qu'**il comprend un moyen pour commuter la direction de transmission des bandes de fréquence du système de transmission à large bande, de sorte que la bande inférieure transmet toujours dans la même direction que le système TDD.

8. Système selon la revendication 7, **caractérisé en ce que** le moyen de commutation est déclenché par un signal de synchronisation obtenu à partir du système TDD pour commuter les bandes de fréquence du système de transmission à large bande.

9. Système selon la revendication 8, **caractérisé en ce que** le signal de synchronisation est sensiblement synchrone du bruit de diaphonie cyclo-stationnaire en provenance du système TDD.

10. Système selon la revendication 7, 8 ou 9, **caractérisé en ce que** la large bande est divisée en un nombre pair de bandes, disposées par paires, de sorte que les bandes inférieure et supérieure de chaque paire transmettent dans des directions opposées.

11. Système selon l'une quelconque des revendications 7 à 10, **caractérisé en ce que** le système de transmission à large bande est un système à lignes numériques d'abonné à très haut débit de bit (VDSL) ou un système à lignes numériques d'abonné asymétriques (ADSL).

12. Système selon l'une quelconque des revendications 7 à 11, **caractérisé en ce que** le système de transmission à bande étroite est un système de réseau numérique à intégration de services en mode comprimé dans le temps (TCM-ISDN).
